# EUROPÄISCHE PATENTSCHRIFT

(11) **EP 3 326 039 B1**
(45) Veröffentlichungstag und Bekanntmachung des Hinweises auf die Patenterteilung: **28.07.2021**
(21) Anmeldenummer: 16736804.2
(22) Anmeldetag: 22.06.2016
(51) Int. Cl.: H04L 12/00, H04W 4/00, G05B 19/418

(54) **VERFAHREN UND SYSTEM ZUR DRAHTLOSEN ÜBERMITTLUNG VON INFORMATIONEN IN DER AUTOMATISIERUNGSTECHNIK**
METHOD AND SYSTEM FOR WIRELESS TRANSMISSION OF INFORMATION IN AUTOMATION ENGINEERING
PROCÉDÉ ET SYSTÈME DE TRANSMISSION SANS FIL D'INFORMATIONS DANS LE DOMAINE DE L'AUTOMATISATION

(30) Priorität: 21.07.2015 DE 102015111841
(43) Veröffentlichungstag der Anmeldung: 30.05.2018
(73) Patentinhaber: Endress+Hauser Process Solutions AG, 4153 Reinach (CH)
(72) Erfinder: MANNBAR, Uwe, 68128 Village Neuf (FR); MEYER, Christoph, 4244 Röschenz (CH); THOREN, Werner, 79585 Steinen (DE); NAZIMEK, Daniel, 79379 Müllheim (DE)
(74) Vertreter: Andres, Angelika Maria
(86) Internationale Anmeldenummer: PCT/EP2016/064375
(87) Internationale Veröffentlichungsnummer: WO 2017/012812

(56) Entgegenhaltungen:
- DE-A1-102009 043 403

## Beschreibung

Die Erfindung beschreibt ein Verfahren und ein System der Automatisierungstechnik zur drahtlosen Übermittlung von zumindest einer ersten Information zwischen zumindest einem Initiator und einer Vielzahl von Empfängern, die sich in einem Empfangsmodus befinden.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, Füllstandsmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Bussysteme, wie Profibus®, FOUNDATION Fieldbus®, HART®, etc. mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung). Die übergeordneten Einheiten dienen unter anderem zur Prozesssteuerung, Prozessvisualisierung, Prozessüberwachung sowie zur Inbetriebnahme der Feldgeräte. Die von den Feldgeräten, hier insbesondere von Sensoren erfassten Messwerte werden über das jeweilige Bussystem an eine oder ggf. mehrere übergeordnete Einheit/Einheiten übermittelt. Daneben erfolgt auch zwecks Konfigurierung, Parametrierung, Diagnose von Feldgeräten oder zwecks Ansteuerung von Aktoren eine Datenübertragung von der übergeordneten Einheit über das Bussystem an die Feldgeräte.

Neben einer drahtgebundenen Datenübertragung zwischen den Feldgeräten und der übergeordneten Einheit wird die drahtlose Datenübertragung bzw. die Funkübertragung von Daten immer wichtiger. Insbesondere WirelessHART® ist zu einem etablierten Standard geworden. Zur Realisierung einer drahtlosen Datenübertragung sind neuere Feldgeräte, insbesondere Sensoren und Aktoren, teilweise als Funk-Feldgeräte ausgebildet. Diese weisen in der Regel eine Funkeinheit und eine Stromquelle als integralen Bestandteil auf, wobei durch die Stromquelle eine autarke Stromversorgung des Feldgerätes ermöglicht wird.

Geräte, die das WirelessHART®-Protokoll unterstützen, können mit bereits vorkonfigurierten Netzwerkeinstellungen geordert werden. Jedoch ist es in bestimmten Situationen notwendig, diese Netzwerkeinstellungen zu ändern. Außerdem müssen Feldgeräte, die keine ab Werk vorkonfigurierten Netzwerkeinstellungen besitzen, zur Netzwerkintegration konfiguriert werden. In diesen Fällen werden die benötigten Netzwerkeinstellungen mittels einer Kabelverbindung auf jedes einzelne Feldgerät übertragen. Hierfür werden PC-basierte Konfigurationsprogramme, wie beispielsweise FieldCare von Endress+Hauser, Pactware, Emerson AMS oder Siemens PDM, oder Handheld-basierte Konfigurationsprogramme wie Field Xpert von Endress+Hauser oder Emerson 475 verwendet. Dieses Verfahren ist sehr zeitaufwendig, da jedes Feldgerät einer Anlage separat konfiguriert werden muss.

In der DE 10 2008 043 170 A1 ist ein Verfahren zur Integration eines zusätzlichen Feldgeräts in ein Funknetzwerk der Automatisierungstechnik beschrieben, in dem bereits mehrere Feldgeräte integriert sind. Hierbei werden Integrationsparameter des Netzwerks mittels eines Bediengerätes oder eines in der Nähe eines neu zu integrierenden Teilnehmers befindlichen Feldgeräts ermittelt und anschließend auf den neuen Teilnehmer übertragen, wodurch dieser in das Netzwerk integriert wird.

In der DE 10 2008 003 575 A1 ist ein Verfahren zur Integration eines neuen Teilnehmerknotens in ein drahtloses Kommunikations-Netzwerk der Prozessautomatisierung offenbart. Hierbei wird anhand vorgegebener Kriterien, wie beispielsweise anhand der Ortsinformation, ein bereits integrierter Knoten gewählt und in einen Integrationsmodus gesetzt, welcher die Integration des neuen Teilnehmerknotens in das Netzwerk ermöglicht.

Nachteil beider vorgestellter Verfahren ist, dass jeweils nur ein Teilnehmer integriert wird. Die Integration einer Vielzahl von Teilnehmern gestaltet sich dadurch äußerst langwierig. Außerdem werden für diese Verfahren zwingend bestehende Netzwerkteilnehmer benötigt, ein Aufbau eines Netzwerks von Grund auf ist daher nicht möglich. Auch ist es nicht möglich, Informationen von einem Teilnehmer zu erhalten oder zu diesem zu senden, ohne diesen in das Netzwerk zu integrieren.

Die DE 10 2009 043 403 A1 offenbart ein Verfahren zum Aufbau eines bidirektionalen Kommunikationspfads in einem drahtlosen Netzwerk, wobei das Netzwerk Knoten in Form eines Senkenknotens und einer Mehrzahl von Teilnehmerknoten aufweist und wobei zwischen dem Senkenknoten und zumindest einem angefragten Knoten der Teilnehmerknoten der Kommunikationspfad für die bidirektionale Übermittlung von Datenpaketen aufzubauen ist.

Der Erfindung liegt die Aufgabe zugrunde, ein Verfahren und ein System vorzustellen, mit dessen Hilfe Informationen zwischen einer Vielzahl von Teilnehmern möglichst effizient übermittelt werden.

Die Erfindung wird durch ein Verfahren der Automatisierungstechnik zur drahtlosen Übermittlung von zumindest einer ersten Information zwischen zumindest einem Initiator und einer Vielzahl von Empfängern, die sich in einem Empfangsmodus befinden, gelöst, das sich durch die folgenden Verfahrensschritte auszeichnet:
- Aussenden der ersten Information, die einen Befehl zur Vererbung der ersten Information und zumindest einen weiteren Befehl enthält, durch den Initiator in einem ersten Kommunikationspuls;
- Empfangen der Information durch zumindest einen Empfänger;
- Aussenden eines weiteren Kommunikationspulses, welcher die identische erste Information wie der erste Kommunikationspuls enthält, durch den zumindest einen informierten Empfänger, der den zuvor gesendeten Kommunikationspuls empfangen hat, und Wechseln des oder der informierten Empfänger in einen Bestätigungsmodus;
- Wiederholung des zuvor beschriebenen Verfahrensschrittes, bis alle Empfänger in den Bestätigungsmodus gewechselt sind;
- Aktivieren von zumindest einem Empfänger, der sich im Bestätigungsmodus befindet;
- Ausführen des zumindest einen in der empfangenen ersten Information enthaltenen weiteren Befehls durch den aktivierten Empfänger; und
- Wechseln des aktivierten Empfängers in den Empfangsmodus.

Als Initiator wird dasjenige Gerät bezeichnet, welches den ersten Kommunikationspuls aussendet und somit die Vererbung der Informationen über die gesamte Anzahl der Empfänger initiiert.

Der große Vorteil des erfindungsgemäßen Verfahrens besteht darin, dass sich die Information exponentiell über die Empfänger ausbreitet. Diese Ausbreitung erfolgt ungerichtet und ohne Restriktionen. Das bedeutet, dass einem Empfänger keine Informationen vorliegen, von welchem informierten Empfänger die Information stammt, welche Empfänger er anschließend informiert und ob oder wie viele Empfänger sich in seiner Reichweite befinden. Die Ausbreitung des Kommunikationspulses erfolgt kugelförmig. Dadurch ist gewährleistet, dass möglichst viele Empfänger einen ausgesendeten Kommunikationspuls empfangen. Mithilfe des erfindungsgemäßen Verfahrens ist es somit möglich, die Information über die gesamte Anzahl von Empfängern, beispielsweise Feldgeräten in einer Fabrikhalle, auf schnelle und effiziente Art und Weise zu verbreiten, ohne dass es notwendig ist, dass die Empfänger den zumindest einen weiteren in der Information enthaltenen Befehl ausführen.

Der Wechsel in den Bestätigungsmodus wird mittels einer aufleuchtenden LED am jeweiligen Empfänger signalisiert. Solange sich der Empfänger in diesem Bestätigungsmodus befindet, blinkt die LED, oder leuchtet dauerhaft. Zusätzlich oder anstelle der Indikation mittels LED wird ein akustisches Signal wiedergegeben, dass den Benutzer über den Wechsel in den Bestätigungsmodus informiert.

Eine vorteilhafte Ausgestaltung des erfindungsgemäßen Verfahrens ist darin zu sehen, dass die Empfänger, die den Kommunikationspuls empfangen haben, für eine definierte Zeit in den Bestätigungsmodus wechseln, bevor sie zurück in den Empfangsmodus wechseln. Sollen nicht alle Empfänger aktiviert werden, so können die restlichen Empfänger auf diese Art und Weise automatisch zurück in den Empfangsmodus wechseln. Außerdem kann dadurch verhindert werden, dass ein übersehener Empfänger dauerhaft im Bestätigungsmodus bleibt und dadurch ein Wiederholen des erfindungsgemäßen Verfahrens nicht möglich ist. Zusätzlich wird verhindert, dass zu viel Energie bei dauerhaftem Betrieb im Bestätigungsmodus, durch die LED oder akustische Signale, verbraucht wird.

Eine vorteilhafte Ausgestaltung des erfindungsgemäßen Verfahrens sieht vor, dass zur Aussendung der Kommunikationspulse ein eigener Funkkanal verwendet wird. In einem bestehenden Netzwerk wird dadurch die eigentliche Informationsübertragung nicht beeinträchtigt. Die eigentliche Informationsübertragung erfolgt außerdem häufig über ein schmales Übertragungsband, dessen Mittenfrequenz nach einem vorgegebenen Muster geändert wird, was als "Frequency Hopping" bezeichnet wird. Durch einen fest vorgegebenen Funkkanal wird gewährleistet, dass die Empfänger die Kommunikationspulse jederzeit empfangen und weitersenden können, unabhängig von der jeweiligen Mittenfrequenz der eigentlichen Funkübertragung.

In einer vorteilhaften Weiterbildung des erfindungsgemäßen Verfahrens wird in dem Kommunikationspuls eine Information über die Anzahl zuvor gesendeter Vererbungen n übermittelt. Jeder Empfänger ist dadurch durch die Anzahl vorausgegangener Vererbungen informiert und sendet selbst die aktuelle Vererbungsnummer.

In einer besonders vorteilhaften Ausgestaltung des erfindungsgemäßen Verfahrens wird die Anzahl der Vererbungen n begrenzt. So können ein oder mehrere Empfänger, die sich in der Nähe des Initiators befinden, informiert werden, ohne dass der Kommunikationspuls an die gesamte Anzahl der Empfänger vererbt werden muss.

Eine besonders vorteilhafte Erweiterung des erfindungsgemäßen Verfahrend sieht vor, dass die Sendeleistung der Kommunikationspulse begrenzt wird. Durch die Sendeleistung der Kommunikationspulse wird deren Reichweite bestimmt. Durch eine mögliche Begrenzung der Sendeleistung lässt dich die zur Verfügung stehende Energie des Initiators und der Empfänger optimal verwalten. Stehen die Empfänger örtlich nah zueinander, so genügt eine geringe Sendeleistung, damit ein ausgesendeter Kommunikationspuls zumindest einen noch nicht informierten Empfänger erreicht. Bei großen Abständen der Empfänger zueinander, beispielsweise in einer weitläufigen Fabrikhalle, kann die Sendeleistung dementsprechend erhöht werden, wodurch die Reichweite der Kommunikationspulse steigt und diese auch in diesem Fall noch nicht informierte Empfänger erreichen.

In einer vorteilhaften Weiterbildung des erfindungsgemäßen Verfahrens wird der informierte Empfänger im Bestätigungsmodus durch Drücken einer am Empfänger angebrachten Taste aktiviert. Alternativ wird er mittels eines am Empfänger befindlichen Touchpads, oder über ein funkfähiges, mobiles Endgerät aktiviert.

Eine Variation des erfindungsgemäßen Verfahrens sieht vor, dass der in der gesendeten ersten Information enthaltene weitere Befehl eine Aufforderung zur Bereitstellung und/oder zum Übermitteln von Prozessdaten des jeweiligen Empfängers an den Initiator enthält. Auf diese Art und Weise können Prozessdaten von allen Empfängern effizient erhalten werden.

In einer besonders vorteilhaften Ausgestaltung des erfindungsgemäßen Verfahrens ist der in der gesendeten ersten Information enthaltene weitere Befehl eine Einladung zur Integration in ein Drahtlosnetzwerk und die Empfänger sind entweder bereits integrierte Teilnehmer, die die erste Information ausschließlich weiterleiten oder potentielle Teilnehmer, die die erste Information weiterleiten und in den Betätigungsmodus wechseln. Für das Verfahren spielt es somit keine Rolle, ob sich die Empfänger bereits in einem Netzwerk befinden, da die Verfahrensschritte parallel zu den eigentlichen Aufgaben der Empfänger durchgeführt werden und diese nicht beeinträchtigen und/oder beeinflussen.

Eine besonders vorteilhafte Weiterbildung des erfindungsgemäßen Verfahrens umfasst folgende Schritte:
- Senden einer Rückmeldung von zumindest einem potentielle Teilnehmer an den Initiator nach Aktivierung des potentiellen Teilnehmers;
- Senden von Zugangsparametern für das Drahtlosnetzwerk von dem Initiator an den potentiellen Teilnehmer; und
- Integration des potentiellen Teilnehmers im Drahtlosnetzwerk.

Somit ist es möglich, einen oder eine Vielzahl an potentiellen Teilnehmern auf effiziente und zeitsparende Art und Weise in ein bereits bestehendes Drahtlosnetzwerk zu integrieren. Es ist außerdem möglich, ein Drahtlosnetzwerk mit mehreren potentiellen Teilnehmern schnell und automatisch von Grund auf in Betrieb zu nehmen. Die Inbetriebnahme erfolgt außerdem äußerst sicher, da sicherheitsrelevante Daten, wie beispielsweise Netzwerkschlüssel, für den Anwender nicht sichtbar übertragen werden.

Eine vorteilhafte Variation des erfindungsgemäßen Verfahren sieht vor, dass der potentielle Teilnehmer, der einen Kommunikationspuls empfängt, automatisch Identifikationsdaten an den Initiator schickt, ohne in den Bestätigungsmodus zu wechseln, wobei der Initiator die Identifikationsdaten mit einer Liste vergleicht und der potentielle Teilnehmer bei Übereinstimmung automatisch in das Drahtlosnetzwerk integriert wird. Somit kann die Integration eines oder einer Vielzahl von potentiellen Teilnehmern noch effizienter erfolgen, da die Aktivierung der potentiellen Teilnehmer im Bestätigungsmodus nun nicht mehr durch den Benutzer manuell erfolgen muss.

In einer besonders bevorzugten Ausgestaltung des erfindungsgemäßen Verfahrens erfolgt nach Empfang der ersten Information weiterer Informationsaustausch zwischen dem Empfänger und dem Initiator zur Übermittlung zumindest einer weiteren Information bidirektional; außerdem erfolgt dieser Informationsaustausch analog zu den Verfahrensschritten zur Vererbung der ersten Information, wobei die weitere Information über die Empfänger vererbt wird und die Empfänger im Empfangsmodus bleiben.

Der große Vorteil dieser Ausgestaltung des erfindungsgemäßen Verfahrens besteht darin, dass die weitere Information auf dieselbe Art und Weise wie die erste Information vererbt wird, wodurch es auch für diese Kommunikation keine Einschränkung für die eigentlichen Aufgaben der Empfänger bedeuten, da auch diese Verfahrensschritte parallel zu den eigentlichen Aufgaben der Empfänger erfolgen.

Die Aufgabe wird außerdem durch ein System bestehend aus zumindest einem Initiator und einer Vielzahl von Empfängern zur drahtlosen Übermittlung von der zumindest ersten Information gelöst, welches zum Durchführen des erfindungsgemäßen Verfahrens geeignet ist.

Der Initiator hat dafür einen Algorithmus implementiert, der den zumindest ersten Kommunikationspuls und dessen erste Information, bestehend aus dem Befehl zur Vererbung der ersten Information und zumindest dem einen weiteren Befehl, generiert. Die Empfänger haben einen Algorithmus implementiert, der die Vererbung eines Kommunikationspulses an weitere Empfänger bei Empfang eines solches Kommunikationspulses und anschließendes Wechseln in den Bestätigungsmodus ermöglicht. Eine Variante besteht darin, dass der Initiator einen Kommunikationspuls generiert, der zusätzlich zu der ersten Information, bestehend aus dem Befehl zur Vererbung der ersten Information und zumindest dem einen weiteren Befehl, den Algorithmus für die Empfänger beinhaltet. Somit müssen die Empfänger den Algorithmus nicht ab Werk erhalten, ebenfalls müsste dieser bei nicht-werksseitiger Implementierung durch den Benutzer vor Inbetriebnahme nicht erst auf dem Empfänger implementiert werden.

In einer vorteilhaften Weiterbildung handelt es sich bei dem Initiator und den Empfängern um Komponenten der Automatisierungstechnik, die eine Drahtloskommunikationseinheit besitzen. Bei den Empfängern und dem Initiator kann es sich darüber hinaus auch um mobile Endgeräte oder um mobile Bediengeräte handeln.

In einer besonders vorteilhaften Ausgestaltung des erfindungsgemäßen Systems handelt es sich bei dem Initiator um eine übergeordnete Einheit und bei den Empfängern um Feldgeräte. Der Initiator kann dabei eine SPS oder ein Controller sein. Des Weiteren kann der Initiator auch ein Gateway, ein Netzwerkmanager oder ein Feldgerät selbst sein.

In einer bevorzugten Variation besteht das System aus einem Drahtlosnetzwerk, bei dem die Empfänger (A, B, C, ..., H) entweder bereits integrierte Teilnehmer (T₁, T₂) oder potentielle Teilnehmer (P₁, P₂, P₃) sind, wobei es sich bei dem Drahtlosnetzwerk um ein Drahtlosnetzwerk der Automatisierungstechnik, insbesondere WirelessHART® handelt. WirelessHART® soll jedoch nur ein Beispiel für eines der vielen gebräuchlichen Drahtlosnetzwerke darstellen. Es versteht sich von selbst, dass das erfindungsgemäße Verfahren nicht auf dieses Protokoll beschränkt ist, sondern mit jedem anderen Drahtlosnetzwerk der Automatisierungstechnik, wie Wireless Profibus® oder einer drahtlosen Foundation Fieldbus® Variante verwendbar ist. Nähere Informationen zu Drahtlosnetzwerkwerken, insbesondere WirelessHART®, sind in der Einleitung zu finden.

Die Erfindung wird anhand der nachfolgenden Figuren näherer erläutert. Es zeigen
Fig. 1 a)-e): die Verfahrensschritte einer vorteilhaften Ausgestaltung des erfindungsgemäßen Verfahrens; und
Fig. 2 a)-d): die Verfahrensschritte einer vorteilhaften Ausgestaltung des erfindungsgemäßen Verfahrens zur Integrierung von potentiellen Teilnehmern in ein Drahtlosnetzwerk.

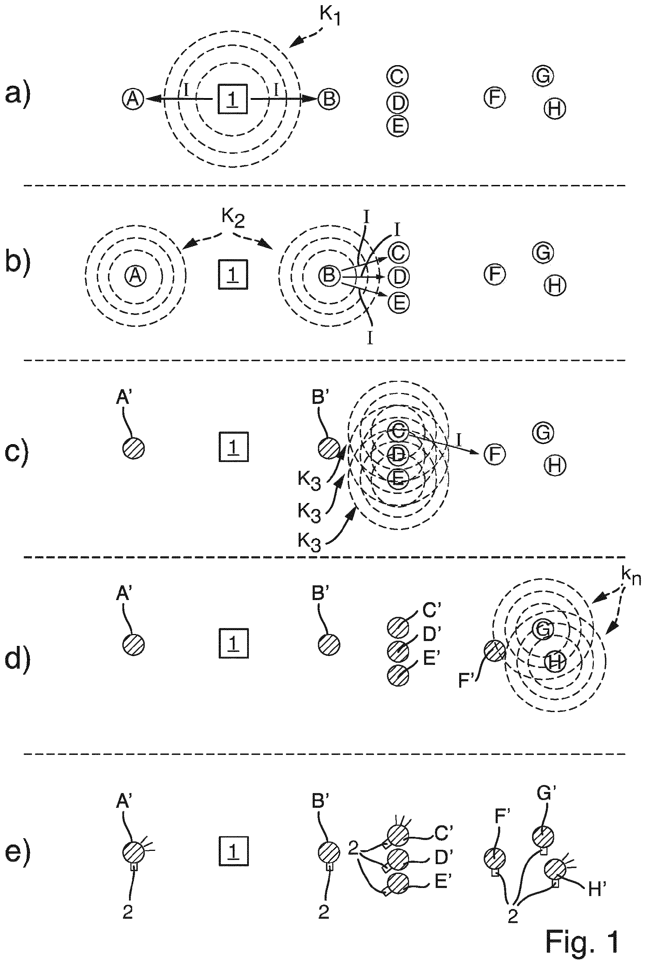

Fig. 1 a)-e) zeigen die Verfahrensschritte einer vorteilhaften Ausgestaltung eines Ausführungsbeispiels des erfindungsgemäßen Verfahrens. Eine Vielzahl potentieller Empfänger A, B, C, ..., H ist um einen Initiator 1 herum angeordnet.

In Fig. 1 a) sendet der Initiator einen ersten Kommunikationspuls K₁ aus, welcher eine erste Information I enthält. Das Aussenden des ersten Kommunikationspulses K₁ kann automatisch oder auf Befehl des Benutzers über eine Taste am Initiator 1 oder über einen Softwarebefehl erfolgen. Der erste Kommunikationspuls K₁ wird kugelförmig vom Initiator 1 ausgesendet. Die Reichweite des ersten Kommunikationspulses K₁ ist ausreichend groß, dass dieser von den Empfängern A, B empfangen wird. Die Reichweite des ersten Kommunikationspulses K₁ ist jedoch nicht groß genug, um die restlichen Empfänger C, D, E, ..., H erreichen zu können.

In Fig. 1 b) werten die Empfänger A, B den von dem Initiator 1 gesendeten ersten Kommunikationspuls K₁ aus und erhalten dadurch den Befehl, die im ersten Kommunikationspuls K₁ enthaltene erste Information I zu vererben. Dafür senden die Empfänger A, B jeweils einen weiteren Kommunikationspuls K₂ aus, der die zum ersten Kommunikationspuls K₁ identische erste Information I enthält.

Der Kommunikationspuls K₂ des Empfängers A trifft dabei auf keinen der Empfänger B, C, ..., H, weswegen an dieser Stelle die Weitervererbung beendet ist. Der Kommunikationspuls K₂ des Empfängers B trifft auf die Empfänger C, D, E und wird von diesen empfangen. Die Reichweite des weiteren Kommunikationspulses K₂ ist jedoch nicht groß genug, um die restlichen Empfänger F, G, H erreichen zu können. Die Empfänger A, B wechseln nach jeweiliger Aussendung des Kommunikationspulses K₂ in einen Bestätigungsmodus, dadurch werden diese fortan als Empfänger A', B' bezeichnet.

In Fig. 1 c) werten die Empfänger C, D, E den von dem Empfänger B' empfangenen weiteren Kommunikationspuls K₂ aus und erhalten dadurch den Befehl, die im weiteren Kommunikationspuls K₂ enthaltene erste Information I zu vererben. Dafür senden die Empfänger C, D, E jeweils einen Kommunikationspuls K₃ aus, der die zum ersten Kommunikationspuls K₁ identische erste Information I enthält.

Die Kommunikationspulse K₃ des Empfängers C, D, E treffen auf den Empfänger F. Der Kommunikationspuls K₃ des Empfängers C wird dabei zuerst von Empfänger F empfangen und ausgewertet, die zeitlich hinterher eintreffenden Kommunikationspulse K₃ der Empfänger D, E werden daher ignoriert. Die Reichweite der Kommunikationspulse K₃ ist jedoch nicht groß genug, um die restlichen Empfänger G, H erreichen zu können. Die Kommunikationspulse K₃ der Empfänger C, D, F treffen ebenfalls auf den Empfänger B'. Da sich dieser im Ruhemodus befindet, werden die Kommunikationspulse K₃ daher ignoriert. Die Empfänger C, D, E wechseln nach jeweiliger Aussendung des Kommunikationspulses K₃ in einen Bestätigungsmodus, dadurch werden diese fortan als Empfänger C', D', E' bezeichnet.

In Fig. 1 d) erfolgt ein zeitlicher Sprung zum letzten Vererbungsschritt. Die Empfänger G, H werten einen Kommunikationspuls aus, welchen sie zuvor vom Empfänger F erhalten haben und erhalten dadurch den Befehl, die in diesem Kommunikationspuls enthaltene erste Information I zu vererben. Dafür senden die Empfänger G, H jeweils einen letzten Kommunikationspuls Kₙ aus, der die zum ersten Kommunikationspuls K₁ identische erste Information I enthält. Der letzte Kommunikationspuls Kₙ der Empfänger G, H trifft dabei auf keinen noch nicht informierten Empfänger A, B, C, ..., H, weswegen die Vererbung beendet ist und alle Empfänger A, B, C, ..., H einen Befehl mit der ersten Information I erhalten haben. Die Empfänger G, H wechseln nach jeweiliger Aussendung des letzten Kommunikationspulses Kn in einen Bestätigungsmodus, dadurch werden diese fortan als Empfänger G', H' bezeichnet.

Fig. 1 e) skizziert den letzten erfindungsgemäßen Verfahrensschritt dieser Ausführungsform. Die Empfänger A', B', C', ..., H' befinden sich im Bestätigungsmodus. Durch Drücken eines am Empfängergehäuse angebrachten Tasters werden die Empfänger A', C', H' aktiviert und führen den in der Information I enthaltenen zusätzlichen Befehl aus. Dies kann beispielsweise ein Befehl zur Bereitstellung von aktuellen Prozessdaten an den Initiator 1 sein.

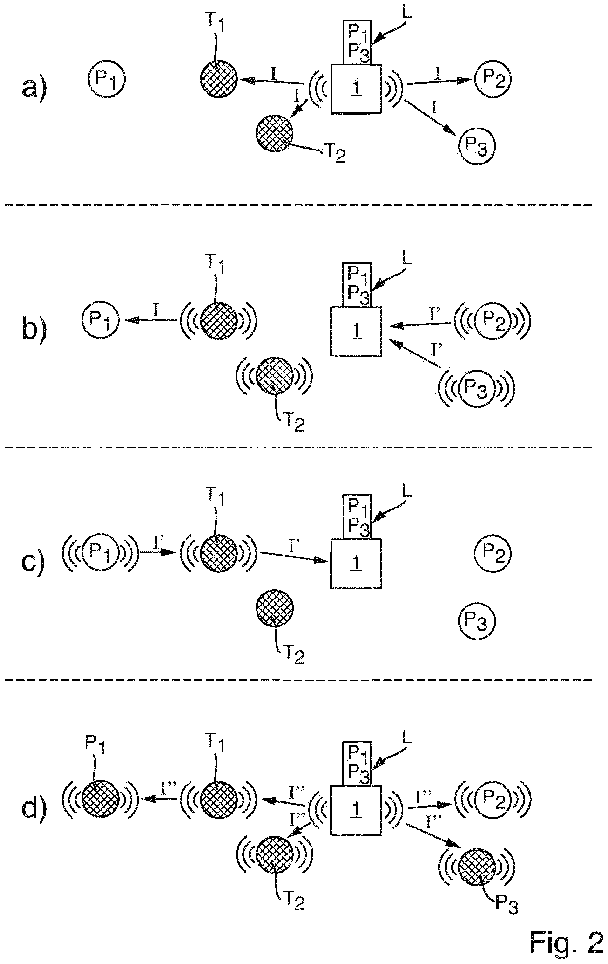

Fig. 2 a)-d) zeigen die Verfahrensschritte einer vorteilhaften Ausgestaltung des erfindungsgemäßen Verfahrens zur Integrierung von potentiellen Teilnehmern in ein Drahtlosnetzwerk. Eine Vielzahl von bereits integrierten Teilnehmern T₁, T₂ und potentiellen Teilnehmer P₁, P₂, P₃ ist um einen Initiator 1 angeordnet. Der Initiator 1 wird durch einen Netzwerkmanager, der eine Initiatorfunktion implementiert hat, dargestellt. Bei dem Drahtlosnetzwerk handelt es sich um ein WirelessHART®-Netzwerk.

In Fig. 2 a) sendet der Initiator 1 eine erste Information I in Form einer Einladung zur Integration in das Drahtlosnetzwerk in einem ersten Kommunikationspuls. Der erste Kommunikationspuls erreicht die Teilnehmer T₁, T₂ und die potentiellen Teilnehmer P₂, P₃. Die Reichweite des ersten Kommunikationspulses ist jedoch nicht groß genug, um den potentiellen Teilnehmer P₁ erreichen zu können. Die Vererbung der Kommunikationspulse ist in Fig.1 genau beschrieben worden und wird an dieser Stelle vereinfacht widergegeben.

In Fig. 2 b) werten die Teilnehmer T₁, T₂ und die potentiellen Teilnehmer P₂, P₃ den von dem Initiator 1 gesendeten ersten Kommunikationspuls aus und erhalten dadurch den Befehl, die im ersten Kommunikationspuls enthaltene erste Information I zu vererben. Dafür senden die Teilnehmer T₁, T₂ und die potentiellen Teilnehmer P₂, P₃ jeweils einen weiteren Kommunikationspuls aus, der die zum ersten Kommunikationspuls identische erste Information I enthält. Dieser weitere Kommunikationspuls wird vom potentiellen Teilnehmer P₁ empfangen.

Anschließend wird die Einladung zur Integration in ein Drahtlosnetzwerk von den Teilnehmer T₁, T₂ und den potentiellen Teilnehmer P₂, P₃ verarbeitet. Diese enthält den Befehl, dass potentielle Teilnehmer Identifikationsdaten an den Initiator 1 senden. Die Teilnehmer T1, T2 reagieren auf diesen Befehl nicht, die potentiellen Teilnehmer P₂, P₃ senden einen jeweils weiteren Kommunikationspuls aus, mit den zusätzlichen Informationen I', die die jeweiligen Identifikationsdaten der potentiellen Teilnehmer P₂, P₃ enthalten. Diese weiteren Kommunikationspulse werden von dem Initiator 1 empfangen.

In Fig. 2 c) wird die Einladung zur Integration in ein Drahtlosnetzwerk von dem potentiellen Teilnehmer P₁, verarbeitet. Der potentielle Teilnehmer P1 sendet einen weiteren Kommunikationspuls aus, mit der zusätzlichen Information I', die die Identifikationsdaten des potentiellen Teilnehmer P₁ enthält. Dieser weiteren Kommunikationspulse werden von dem Teilnehmer T₁ empfangen.

In der zusätzlichen Information I' ist ein Befehl zur Vererbung dieser Information I' enthalten. Der Teilnehmer T₁ sendet daher einen weiteren Kommunikationspuls der aus, der von dem Initiator 1 empfangen wird.

In Fig. 2 d) vergleicht der Initiator die mit den zusätzlichen Informationen I' empfangenen Identifikationsdaten der potentiellen Empfänger P₁, P₂, P₃ mit den in einer Liste L gespeicherten Identifikationsdaten. Die potentiellen Empfänger P₁, P₃ sind in der Liste aufgeführt, P₂ nicht. Anschließend sendet der Initiator einen weiteren Kommunikationspuls mit zusätzlichen Informationen I" aus, welche Netzwerkeinstellungen und Netzwerkschlüssel für die potentiellen Teilnehmer P₁, P₃ enthalten.

Dieser weitere Kommunikationspuls wird von den Teilnehmern T₁, T₂ und von den potentiellen Teilnehmern P₂, P₃ empfangen und dessen zusätzliche Informationen I" in jeweils einem weiteren Kommunikationspuls vererbt. Einer dieser Kommunikationspulse wird von dem potentiellen Teilnehmer P₁ empfangen und in einem zusätzlichen Kommunikationspuls vererbt, der jedoch auf keinen weiteren Teilnehmer trifft. Anschließend verarbeiten die potentiellen Teilnehmer P₁, P₃ die zusätzlichen Informationen I" und werden durch passende Netzwerkeinstellungen und Netzwerkschlüssel im Drahtlosnetzwerk integriert.

### Bezugszeichenliste

- 1: Initiator
- 2: Taster
- A, B, C, ..., H: Empfänger
- A', B', C', ..., H': Empfänger im Bestätigungsmodus
- I: erste Information
- I', I": weitere Informationen
- K₁, K₂, K₃, ..., Kₙ: Kommunikationspulse
- L: Liste
- P₁, P₂, P₃: potentielle Teilnehmer
- T₁, T₂: in Drahtlosnetzwerk integrierte Teilnehmer

## Patentansprüche

1. Verfahren der Automatisierungstechnik zur drahtlosen Übermittlung von zumindest einer ersten Information (I) zwischen zumindest einem Initiator (1) und einer Vielzahl von Empfängern (A, B, C, ..., H), die sich in einem Empfangsmodus befinden, umfassend folgende Schritte:
- Aussenden der ersten Information (I), die einen Befehl zur Vererbung der ersten Information und zumindest einen weiteren Befehl enthält, durch den Initiator (1) in einem ersten Kommunikationspuls (K₁);
- Empfangen der ersten Information (I) durch zumindest einen Empfänger (A, B, C, ..., H);
- Aussenden eines weiteren Kommunikationspulses (K₂, K₃, ..., Kₙ), welcher die identische erste Information (I) wie der erste Kommunikationspuls (K₁) enthält, durch den zumindest einen informierten Empfänger (A, B, C, ..., H), der den zuvor gesendeten Kommunikationspuls empfangen hat, und Wechseln des oder der informierten Empfänger (A, B, C, ..., H) in einen Bestätigungsmodus;
- Wiederholung des zuvor beschriebenen Verfahrensschrittes, bis alle Empfänger (A, B, C, ..., H) in den Bestätigungsmodus gewechselt sind;
- Aktivieren von zumindest einem Empfänger (A', B', C', ..., H'), der sich im Bestätigungsmodus befindet;
- Ausführen des zumindest einen in der empfangenen ersten Information (I) enthaltenen weiteren Befehls durch den aktivierten Empfänger (A', B', C', ..., H'); und
- Wechseln des aktivierten Empfängers (A', B', C', ..., H') in den Empfangsmodus.

2. Verfahren nach Anspruch 1, wobei die Empfänger (A, B, C, ..., H), die die Kommunikationspulse (K₁, K₂, K₃, ..., Kₙ) empfangen haben, für eine definierte Zeit in den Bestätigungsmodus wechseln, bevor sie zurück in den Empfangsmodus wechseln.

3. Verfahren nach einem Ansprüche 1 oder 2, wobei zur Aussendung der Kommunikationspulse (K₁, K₂, K₃, ..., Kₙ) ein eigener Funkkanal verwendet wird.

4. Verfahren nach einem der vorherigen Ansprüche, wobei in den Kommunikationspulsen (K₁, K₂, K₃, ..., Kₙ) eine Information über die Anzahl zuvor gesendeter Vererbungen übermittelt wird.

5. Verfahren nach einem der vorherigen Ansprüche, wobei die Anzahl der Vererbungen begrenzt wird.

6. Verfahren nach einem der vorherigen Ansprüche, wobei die Sendeleistung der Kommunikationspulse (K₁, K₂, K₃, ..., Kₙ) begrenzt wird.

7. Verfahren nach einem der vorherigen Ansprüche, wobei der informierte Empfänger (A', B', C', ..., H') im Bestätigungsmodus durch Drücken einer am Empfänger angebrachten Taste (2) aktiviert wird.

8. Verfahren nach einem der vorherigen Ansprüche, wobei der in der gesendeten ersten Information (I) enthaltene weitere Befehl eine Aufforderung zur Bereitstellung und/oder zum Übermitteln von Prozessdaten des jeweiligen Empfängers (A, B, C, ..., H) an den Initiator (1) enthält.

9. Verfahren nach einem der vorherigen Ansprüche 1 bis 7, wobei der in der gesendeten ersten Information (I) enthaltene weitere Befehl eine Einladung zur Integration in ein Drahtlosnetzwerk ist und die Empfänger (A, B, C, ..., H) entweder bereits integrierte Teilnehmer (T₁, T₂) sind, die die erste Information ausschließlich weiterleiten oder potentielle Teilnehmer (P₁, P₂, P₃) sind, die die erste Information weiterleiten und in den Betätigungsmodus wechseln.

10. Verfahren nach Anspruch 9, umfassend folgende Schritte:
- Senden einer Rückmeldung von zumindest einem potentiellen Teilnehmer (P₁, P₂, P₃) an den Initiator (1) nach Aktivierung des potentiellen Teilnehmers (P₁, P₂, P₃);
- Senden von Zugangsparametern für das Drahtlosnetzwerk von dem Initiator (1) an den potentiellen Teilnehmer (P₁, P₂, P₃); und
- Integration des potentiellen Teilnehmers (P₁, P₂, P₃) im Drahtlosnetzwerk.

11. Verfahren nach Anspruch 9, wobei der potentielle Teilnehmer (P₁, P₂, P₃), der einen Kommunikationspuls (K₁, K₂, K₃, ..., Kₙ) empfängt, automatisch Identifikationsdaten an den Initiator (1) schickt, ohne in den Bestätigungsmodus zu wechseln, wobei der Initiator (1) die Identifikationsdaten mit einer Liste (L) vergleicht und der potentielle Teilnehmer (P₁, P₂, P₃) bei Übereinstimmung automatisch in das Drahtlosnetzwerk integriert wird.

12. Verfahren nach einem der Ansprüche 8 bis 11, wobei nach Empfang der ersten Information weiterer Informationsaustausch zwischen dem Empfänger (A, B, C, ..., H) und dem Initiator (1) zur Übermittlung zumindest einer weiteren Information (I', I") bidirektional erfolgt und der Informationsaustausch analog zu den Verfahrensschritten in Anspruch 1 erfolgt, wobei die weitere Information (I', I") über die Empfänger (A, B, C, ..., H) vererbt wird und die Empfänger (A, B, C, ..., H) im Empfangsmodus bleiben.

13. System, bestehend aus zumindest einem Initiator (1) und einer Vielzahl von Empfängern (A, B, C, ..., H) zur drahtlosen Übermittlung von der zumindest ersten Information (I), das zum Durchführen des Verfahrens nach zumindest einem der Ansprüche 1 bis 12 geeignet ist.

14. System nach Anspruch 13, wobei es sich bei dem Initiator (1') und den Empfängern (A, B, C, ..., H) um Komponenten der Automatisierungstechnik handelt, die eine Drahtloskommunikationseinheit besitzen, und/oder wobei es sich bei dem Initiator (1) um eine übergeordnete Einheit und bei den Empfängern (A, B, C, ..., H) um Feldgeräte handelt.

15. System nach einem der Ansprüche 13 bis 15, bestehend aus einem Drahtlosnetzwerk, bei dem die Empfänger (A, B, C, ..., H) entweder bereits integrierte Teilnehmer (T₁, T₂) oder potentielle Teilnehmer (P₁, P₂, P₃) sind, wobei es sich bei dem Drahtlosnetzwerk um ein Drahtlosnetzwerk der Automatisierungstechnik, insbesondere WirelessHART®, handelt.

## Claims

1. Procedure used in automation engineering for the wireless transmission of at least first information (I) between at least an initiator (1) and multiple receivers (A, B, C, ..., H) which are in a reception mode, wherein said procedure comprises the following steps:
- Transmission, via the initiator (1), of first information (I) containing a command on the inheritance of the first information and at least another command, in a first communication pulse (K₁);
- Reception of the first information (I) by at least one receiver (A, B, C, ..., H);
- Transmission - by the at least one informed receiver (A, B, C, ..., H) which received the communication pulse transmitted previously - of an additional communication pulse (K₂, K₃, ..., Kₙ) containing first information (I) identical to that of first communication pulse (K₁), and switching of the informed receiver(s) (A, B, C, ..., H) to a confirmation mode;
- Repetition of the process step described above until all the receivers (A, B, C, ..., H) are switched to the confirmation mode;
- Activation of at least one receiver (A', B', C', ..., H') which is in the confirmation mode;
- Execution of the at least one additional command contained in the first information (I) received by the activated receiver (A', B', C', ..., H'); and
- Switching of the activated receiver (A', B', C', ..., H') to the reception mode.

2. Procedure as claimed in Claim 1, wherein the receivers (A, B, C, ..., H) that have received the communication pulses (K₁, K₂, K₃, ..., Kₙ) switch to the confirmation mode for a defined time before they switch back to the reception mode.

3. Procedure as claimed in one of the Claims 1 or 2, wherein a dedicated radio channel is used to transmit the communication pulses (K₁, K₂, K₃, ..., Kₙ).

4. Procedure as claimed in one of the previous claims, wherein information about the number of inheritances previously sent is transmitted in the communication pulses (K₁, K₂, K₃, ..., Kₙ).

5. Procedure as claimed in one of the previous claims, wherein the number of inheritances is limited.

6. Procedure as claimed in one of the previous claims, wherein the transmission capacity of the communication pulses (K₁, K₂, K₃, ..., Kₙ) is limited.

7. Procedure as claimed in one of the previous claims, wherein the informed receiver (A', B', C', ..., H') is activated in the confirmation mode by pressing a button (2) arranged on the receiver.

8. Procedure as claimed in one of the previous claims, wherein the additional command contained in the first transmitted information (I) contains a command to provide and/or transmit process data of the individual receiver (A, B, C, ..., H) to the initiator (1).

9. Procedure as claimed in one of the previous Claims 1 to 7, wherein the additional command contained in the first transmitted information (I) is an invitation to integrate into a wireless network and wherein the receivers (A, B, C, ..., H) are either participants (T₁, T₂) that are already integrated and only forward the first information, or are potential participants (P₁, P₂, P₃) that forward the first information and switch to the confirmation mode.

10. Procedure as claimed in Claim 9, wherein said procedure comprises the following steps:
- Transmission of a feedback message from at least one potential participant (P₁, P₂, P₃) to the initiator (1) following activation of the potential participant (P₁, P₂, P₃);
- Transmission of access parameters for the wireless network from the initiator (1) to the potential participant (P₁, P₂, P₃); and
- Integration of the potential participant (P₁, P₂, P₃) in the wireless network.

11. Procedure as claimed in Claim 9, wherein the potential participant (P₁, P₂, P₃) that receives a communication pulse (K₁, K₂, K₃, ..., Kₙ) automatically sends identification data to the initiator (1) without switching to the confirmation mode, wherein the initiator (1) compares the identification data to a list (L) and the potential participant (P₁, P₂, P₃) is automatically integrated into the wireless network if the data matches.

12. Procedure as claimed in one of the Claims 8 to 11, wherein, following the reception of the first information, another exchange of information takes place between the receiver (A, B, C, ..., H) and the initiator (1) for the bidirectional transmission of at least additional information (I', I") and the information is exchanged in the same manner as described in the procedural steps as claimed in Claim 1, wherein the additional information (I', I") is inherited via the receivers (A, B, C, ..., H) and the receivers (A, B, C, ..., H) remain in reception mode.

13. System consisting of at least an initiator (1) and multiple receivers (A, B, C, ..., H) for the wireless transmission of the at least first information (I), wherein said system is suitable for performing the procedure as claimed in at least one of the Claims 1 to 12.

14. System as claimed in Claim 12, wherein the initiator (1) and the receivers (A, B, C, ..., H) are components used in automation engineering that have a wireless communication unit, and/or wherein the initiator (1) is a higher-level unit and the receivers (A, B, C, ..., H) are field devices.

15. System as claimed in one of the Claims 13 to 15, consisting of a wireless network wherein the receivers (A, B, C, ..., H) are either participants that are already integrated (T₁, T₂) or potential participants (P₁, P₂, P₃), wherein the wireless network is a wireless network used in automation engineering, particularly WirelessHART®.

## Revendications

1. Procédé de la technique d'automatisation pour la transmission sans fil d'au moins une première information (I) entre au moins un initiateur (1) et une pluralité de destinataires (A, B, C, ..., H) qui se trouvent dans un mode de réception, lequel procédé comprend les étapes suivantes :
- Émission, par l'initiateur (1), de la première information (I) comprenant une commande d'héritage de la première information et au moins une autre commande, dans une première impulsion de communication (K₁) ;
- Réception de la première information (I) par au moins un destinataire (A, B, C, ..., H) ;
- Émission - par l'au moins un destinataire informé (A, B, C, ..., H) qui a reçu l'impulsion de communication transmise précédemment - d'une impulsion de communication (K₂, K₃, ..., Kₙ) supplémentaire contenant la première information (I), laquelle impulsion supplémentaire est identique à la première impulsion de communication (K₁), et passage du ou des destinataires informés (A, B, C, ..., H) dans un mode d'accusé de réception ;
- Répétition de l'étape de procédé décrite précédemment jusqu'à ce que tous les destinataires (A, B, C, ..., H) soient passés en mode d'accusé de réception ;
- Activation d'au moins un destinataire (A', B', C', ..., H') qui est en mode d'accusé de réception ;
- Exécution de l'au moins une commande supplémentaire contenue dans la première information (I) reçue par le destinataire (A', B', C', ..., H') activé ; et
- Passage du destinataire (A', B', C', ..., H') activé dans le mode de réception.

2. Procédé selon la revendication 1, pour lequel les destinataires (A, B, C, ..., H) qui ont reçu les impulsions de communication (K₁, K₂, K₃, ..., Kₙ) passent en mode d'accusé de réception pendant un temps défini avant de repasser en mode de réception.

3. Procédé selon l'une des revendications 1 ou 2, pour lequel un canal radio dédié est utilisé pour transmettre les impulsions de communication (K₁, K₂, K₃, ..., Kₙ).

4. Procédé selon l'une des revendications précédentes, pour lequel l'information sur le nombre d'héritages transmis précédemment est transmise dans les impulsions de communication (K₁, K₂, K₃, ..., Kₙ).

5. Procédé selon l'une des revendications précédentes, pour lequel le nombre d'héritages est limité.

6. Procédé selon l'une des revendications précédentes, pour lequel la puissance d'émission des impulsions de communication (K₁, K₂, K₃, ..., Kₙ) est limitée.

7. Procédé selon l'une des revendications précédentes, pour lequel le destinaire informé (A', B', C', ..., H') est activé en mode d'accusé de réception par appui sur une touche (2) disposée sur le destinataire.

8. Procédé selon l'une des revendications précédentes, pour lequel la commande supplémentaire contenue dans la première information transmise (I) contient une demande de mise à disposition et/ou de transmission de données de process du destinataire respectif (A, B, C, ..., H) à l'initiateur (1).

9. Procédé selon l'une des revendications 1 à 7, pour lequel la commande supplémentaire contenue dans la première information (I) transmise est une invitation à l'intégration dans un réseau sans fil et les destinataires (A, B, C, ..., H) sont soit des participants (T₁, T₂) déjà intégrés transmettant exclusivement la première information, soit des participants potentiels (P₁, P₂, P₃) transmettant la première information et passant en mode d'accusé de réception.

10. Procédé selon la revendication 9, lequel procédé comprend les étapes suivantes :
- Envoi d'un accusé de réception d'au moins un participant potentiel (P₁, P₂, P₃) à l'initiateur (1) après activation du participant potentiel (P₁, P₂, P₃) ;
- Envoi de paramètres d'accès pour le réseau sans fil de l'initiateur (1) au participant potentiel (P₁, P₂, P₃) ; et
- Intégration du participant potentiel (P₁, P₂, P₃) dans le réseau sans fil.

11. Procédé selon la revendication 9, pour lequel le participant potentiel (P₁, P₂, P₃) recevant une impulsion de communication (K₁, K₂, K₃, ..., Kₙ) envoie automatiquement des données d'identification à l'initiateur (1) sans passer en mode d'accusé de réception, l'initiateur (1) comparant les données d'identification à une liste (L) et le participant potentiel (P₁, P₂, P₃) étant intégré automatiquement au réseau sans fil en cas de concordance.

12. Procédé selon l'une des revendications 8 à 11, pour lequel, après réception de la première information, un autre échange d'informations entre le destinataire (A, B, C, ..., H) et l'initiateur (1) pour la transmission d'au moins une autre information (I', I") a lieu de manière bidirectionnelle et l'échange d'informations a lieu de manière analogue aux étapes du procédé selon la revendication 1, l'autre information (I', I") étant héritée via les destinataires (A, B, C, ..., H) et les destinataires (A, B, C, ..., H) restant en mode de réception.

13. Système constitué au moins d'un initiateur (1) et d'une pluralité de destinataires (A, B, C, ..., H) pour la transmission sans fil de l'au moins une première information (I), lequel système est adapté à la mise en œuvre du procédé selon au moins l'une des revendications 1 à 12.

14. Système selon la revendication 12, pour lequel l'initiateur (1) et les destinataires (A, B, C, ..., H) sont des composants de la technique d'automatisation pourvus d'une unité de communication sans fil, et/ou pour lequel l'initiateur (1) est une unité maître et les destinataires (A, B, C, ..., H) sont des appareils de terrain.

15. Système selon l'une des revendications 13 à 15, constitué d'un réseau sans fil pour lequel les destinataires (A, B, C, ..., H) sont soit des participants déjà intégrés (T₁, T₂), soit des participants potentiels (P₁, P₂, P₃), le réseau sans fil étant un réseau sans fil de la technique d'automatisation, notamment un réseau WirelessHART®.
